# EUROPÄISCHE PATENTANMELDUNG

(11) **EP 0 918 020 A1**
(43) Veröffentlichungstag der Anmeldung: **26.05.1999**
(21) Anmeldenummer: 98118249.6
(22) Anmeldetag: 25.09.1998
(51) Int. Cl.: B65D 51/20

(54) **Einwegbecher**

(30) Priorität: 21.11.1997 DE 19751594
(71) Anmelder: NATEC, REICH, SUMMER GmbH & Co. KG, 88178 Heimenkrich (DE)
(72) Erfinder: Stahl, Peter, 88161 Lindenberg (DE); Baur, Wilhelm, 88167 Gestratz (DE)
(74) Vertreter: COHAUSZ HANNIG DAWIDOWICZ & PARTNER

(57) **Zusammenfassung**

Die Erfindung betrifft einen Einwegbecher (1) aus Kunststoff, insbesondere für Milchprodukte wie Joghurt, Quark oder Käase, mit einer am oberen waagerechten Öffnungsrand (2) nach außen überkragenden angeformten flanschförmigen waagerechten Fläche (3) insbesondere in koaxialer Ringform, deren Innenrand den obersten Öffnungsrand bildet und auf der eine Folie (4) zum luftdichten Verschließen des Bechers befestigt ist. Am Außenrand der Fläche (3) steht rundum ein Wulst (5) nach oben vor, auf dem ein wiederverwendbarer Deckel (9) aus Kunststoff lösbar befestigbar ist, der an seinem Außenrand eine nach unten hin offene Nut (8) aufweist, in der abdichtend der Wulst (5) einliegt.

## Beschreibung

Die Erfindung betrifft einen Einwegbecher aus Kunststoff, insbesondere für Milchprodukte wie Joghurt, Quark oder Käse, mit einer am oberen waagerechten Öffnungsrand nach außen überkragenden angeformten flanschförmigen waagerechten Fläche insbesondere in koaxialer Ringform, deren Innenrand den obersten Öffnungsrand bildet und auf der eine Folie zum luftdichten Verschließen des Bechers befestigbar ist.

Es ist bekannt, einen Einwegbecher aus Kunststoff, insbesondere für Milchprodukte durch eine Folie zu verschließen, die auf einer oberen waagerechten Ringfläche aufgesiegelt wird und von Hand abziehbar ist.

Ferner ist es bekannt, diesen Einwegbecher durch einen zusätzlichen Deckel zu verschließen, der dem Becher beigefügt ist und der nach Abziehen der Folie über die Becheröffnung gedrückt wird, wobei der Deckelrand die Ringfläche außen übergreift. Hierdurch kann der Becher nach Abziehen der Folie wieder verschlossen werden. Allerdings ist ein solcher Verschluß durch den bekannten zusätzlichen Deckel nicht luftdicht und ferner bedeutet ein solcher zusätzlicher Kunststoffdeckel eine erhebliche Materialverschwendung.

Aufgabe der Erfindung ist es, einen Einwegbecher der eingangs genannten Art so zu verbessern, daß die Becheröffnung nach Abziehen der Folie luftdicht verschließbar ist, ohne dem Becher einen zusätzlichen Deckel beilegen zu müssen.

Diese Aufgabe wird erfindungsgemäß dadurch gelöst, daß am Außenrand der Fläche rundum ein Wulst, insbesondere in koaxialer Ringform nach oben vorsteht, auf dem ein wiederverwendbarer Deckel aus Kunststoff lösbar befestigbar ist, der an seinem Außenrand eine nach unten hin offene Nut aufweist, in der abdichtend der Wulst einliegt.

Aufgrund der besonderen Form des Öffnungsrandes des Bechers, kann die Becheröffnung durch einen Deckel verschlossen werden, der normalerweise sich bereits im Haushalt des Verbrauchers befindet. Ein solcher an sich bekannter Deckel wird in vielen Kaushalten zum Verschließen von Kunststoffschüsseln verwendet, die luftdicht durch diesen Deckel verschlossen werden können. Solche Behälter und Schüsseln mit luftdicht verschließbarem Deckel sind z.B. von "Tupperware" bekannt.

Der Einwegbecher ist damit kompatibel zu bereits im Haushalt des Verbrauchers befindlichen Kunststoffdeckeln, so daß eine erhebliche Materialeinsparung erzielt wird und dennoch die geöffneten Einwegbecher luftdicht wieder verschließbar sind. Der obere Rand des Einwegbechers ist also derart geformt, daß ein wiederverwendbarer Standarddeckel zum Schließen benutzt werden kann.

Besonders vorteilhaft ist es, wenn der Wulst von einem nach oben abgewinkelten Bereich des Flachmaterials der Fläche gebildet ist. Hierbei sollte der Wulst mindestens doppelt so dick sein wie die Dicke des Flachmaterials im Bereich der Fläche.

Eine andere einfache Konstruktion und preiswerte Herstellung eines ausreichend dicken Wulstes wird erreicht, wenn der Wulst von einer doppelten Lage des Flachmaterials gebildet ist. Hierdurch kann der Wulst auch in sich federnd ausgebildet sein, wobei besonders vorteilhaft ist, wenn das Flachmaterial im Bereich des Wulstes im Querschnitt ein auf dem Kopf stehendes "V" bildet.

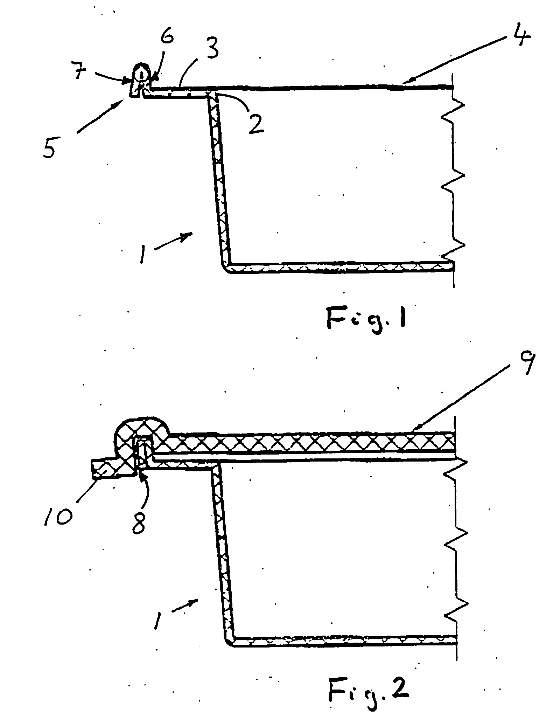

Ein Ausführungsbeispiel der Erfindung ist in der Zeichnung dargestellt und wird im folgenden näher beschrieben. Es zeigen
- Fig. 1: einen senkrechten Schnitt durch eine Becherhälfte mit aufgesiegelter Folie ohne Deckel und
- Fig. 2: einen Schnitt entsprechend Fig. 1 mit aufgesetztem Deckel.

Ein Einwegbecher 1 aus Kunststoff für Milchprodukte wie Yoghurt, Quark oder Käse besitzt eine sich nach oben chronisch erweiternde Form mit einer oberen Öffnung, deren Öffnungsrand 2 vorzugsweise kreisförmig ist. Am Öffnungsrand 2 ist eine nach außen überkragende flanschförmige Fläche 3 insbesondere in koaxialer Ringform angeformt, die eine waagerechte Oberseite bildet, auf der der Rand einer Folie 4 aufsiegelbar oder aufklebbar ist. Die Folie 4 ist von der Oberseite der Ringfläche 3 von Hand abziehbar, wenn der Inhalt des Bechers verzehrt werden soll.

An der Außenseite Fläche 3 ist ein Wulst 5, insbesondere in koaxialer Ringform rundum angeformt, der die Fläche 3 nach oben überragt. Der Wulst 5 hat damit eine geringere Höhe mit vorzugsweise zylindrischer koaxialer Innen- und Außenwand 6, 7, wobei diese Wände 6, 7 senkrecht auf der Fläche 3 stehen, wenn der Wulst 5 von der Nut 8 eines Deckels 9 übergriffen wird.

Im Ausführungsbeispiel besteht der Wulst aus einer doppelten Lage des Flachmaterials der Fläche 3, wobei der Wulst im Querschnitt ein auf den Kopf stehendes "V" bildet.

Um den Becher nach Abnahme der Folie 4 verschließen zu können, ist hierfür der Deckel 9 vorgesehen, der an seinem äußeren Rand die nach unten offene senkrechte Nut 8 aufweist, deren Breite der doppelten Dicke des Flachmaterials entspricht. Wird der Deckel auf den Wulst 5 mit seiner Nut 8 gedrückt, so werden die beiden Lagen 5a, 5b zusammengedrückt, so daß ein federnder Halt des Wulstes 5 in der Nut 8 gegeben ist.

Der Deckel 9 besteht aus einem flexiblen Kunststoffmaterial erheblich größerer Dicke als das Material des Bechers 1. Solche Deckel sind zum Verschließen von Behältern, insbesondere für den Kühlschrank bekannt und bilden die Deckel von Tupperware. Am äußeren Rand der Nut 8 ist hierbei ein flanschförmiger äußerer Ring 10 angeordnet, der von Hand leicht untergreifbar ist, um den Deckel 9 vom Wulst 5 lösen zu können.

Die Fläche 3 und der Wulst 5 können nicht nur kreis- bzw. ringförmig sein, sondern auch oval, rechteckig und insbesondere quadratisch.

## Patentansprüche

1. Einwegbecher (1) aus Kunststoff, insbesondere für Milchprodukte wie Joghurt, Quark oder Käse, mit einer am oberen waagerechten Öffnungsrand (2) nach außen überkragenden angeformten flanschförmigen waagerechten Fläche (3) insbesondere in koaxialer Ringform, deren Innenrand den obersten Öffnungsrand bildet und auf der eine Folie (4) zum luftdichten Verschließen des Bechers befestigbar ist, **dadurch gekennzeichnet,** daß am Außenrand der Fläche (3) rundum ein Wulst (5) insbesondere in koaxialer Ringform nach oben vorsteht, auf dem ein wiederverwendbarer Deckel (9) aus Kunststoff lösbar befestigbar ist, der an seinem Außenrand eine nach unten hin offene Nut (8) aufweist, in der abdichtend der Wulst (5) einliegt.

2. Einwegbecher nach Anspruch 1, **dadurch gekennzeichnet,** daß der Wulst (5) von einem nach oben abgewinkelten Bereich des Flachmaterials der Fläche (3) gebildet ist.

3. Einwegbecher nach Anspruch 2, **dadurch gekennzeichnet,** daß der Wulst (5) mindestens doppelt so dick ist wie die Dicke des Flachmaterials im Bereich der Fläche (3).

4. Einwegbecher nach Anspruch 3, **dadurch gekennzeichnet,** daß der Wulst (5) von einer doppelten Lage des Flachmaterials gebildet ist.

5. Einwegbecher nach Anspruch 4, **dadurch gekennzeichnet,** daß das Flachmaterial im Bereich des Wulstes (5) im Querschnitt ein auf dem Kopf stehendes "V" bildet.
